# EUROPÄISCHE PATENTSCHRIFT

(11) **EP 2 483 575 B1**
(45) Veröffentlichungstag und Bekanntmachung des Hinweises auf die Patenterteilung: **04.05.2016**
(21) Anmeldenummer: 10703846.5
(22) Anmeldetag: 09.02.2010
(51) Int. Cl.: F16H 47/04, F16H 3/093, F16H 37/08

(54) **GETRIEBEVORRICHTUNG MIT LEISTUNGSVERZWEIGUNG**
TRANSMISSION DEVICE WITH POWER SPLITTING
DISPOSITIF DE TRANSMISSION À DÉRIVATION DE PUISSANCE

(30) Priorität: 29.09.2009 DE 102009045087
(43) Veröffentlichungstag der Anmeldung: 08.08.2012
(73) Patentinhaber: ZF Friedrichshafen AG, 88038 Friedrichshafen (DE)
(72) Erfinder: FISCHER, Roland, 88094 Oberteuringen (DE); SIBER, Michael, 72362 Nusplingen (DE); MORRISON, Robert, 88069 Tettnang (DE)
(86) Internationale Anmeldenummer: PCT/EP2010/051550
(87) Internationale Veröffentlichungsnummer: WO 2011/038941

(56) Entgegenhaltungen:
- WO-A1-2009/047037
- WO-A1-2009/047038
- DE-A1-102008 001 613
- US-A- 4 121 479

## Beschreibung

Die Erfindung betrifft eine Getriebevorrichtung mit Leistungsverzweigung gemäß der im Oberbegriff des Patentanspruchs 1 näher definierten Art.

Ein Leistungsverzweigungsgetriebe, insbesondere für eine Arbeitsmaschine, wie beispielsweise einem Radlader, ist aus der gattungsgemäßen WO 2009/047038A und der DE 10 2007 047 194 A1 bekannt und ist mit einem hydrostatischen und einem mechanischen Leistungszweig ausgebildet. Die Leistungszweige werden über ein Summierungsgetriebe summiert, wobei dem Summierungsgetriebe ein Reversiergetriebe vorgeschaltet und ein Gangschaltungsgetriebe nachgeschaltet sind.

Über das Leistungsverzweigungsgetriebe sind jeweils zwei Fahrbereiche für Vorwärtsfahrt und Rückwärtsfahrt darstellbar, innerhalb welchen eine Übersetzung des Leistungsverzweigungsgetriebes stufenlos über eine Hydrostateinrichtung variierbar ist. Die Fahrbereiche sind durch Abschalten eines zugeschalteten Schaltelementes und durch Zuschalten eines abgeschalteten Schaltelementes wechselbar.

Nachteilhafterweise ist ein zum Darstellen eines zweiten Fahrbereiches des Leistungsverzweigungsgetriebes vorgesehenes Schaltelement auf einer Hydrostatwelle der Hydrostateinrichtung angeordnet, weshalb eine Anbindung der Hydrostatwelle an einen mechanischen Leistungszweig konstruktiv aufwendig ist. Dies resultiert unter anderem aus der Tatsache, dass die Hydrostateinrichtung zur Schwingungsdämpfung üblicherweise über eine elastische Gummilagereinrichtung gelagert ist und daher im Verbindungsbereich zwischen der Hydrostateinrichtung und dem mechanischen Leistungszweig ein sich im Betrieb verändernder Achsversatz durch eine entsprechende gelenkig ausgeführte Verbindungseinrichtung auszugleichen ist. Dieser permanente Ausgleich führt jedoch ohne zusätzliche konstruktive Maßnahmen wiederum dazu, dass im Bereich des auf der Hydrostatwelle angeordneten Schaltelementes in unerwünschtem Umfang Schwingungen angeregt werden und sich eine Taumelneigung erhöht.

Des Weiteren ist das Leistungsverzweigungsgetriebe aufgrund der Anordnung des Schaltelementes auf der Hydrostatwelle durch einen hohen Bauraumbedarf gekennzeichnet, da die beiden Hydrostatwellen der Hydrostateinrichtung mit einem gewissen Abstand zueinander anzuordnen sind, um den für den Einbau des Schaltelementes auf der Hydrostatwelle erforderlichen Bauraum zur Verfügung stellen zu können.

Der vorliegenden Erfindung liegt daher die Aufgabe zugrunde, eine bauraumgünstige und konstruktiv einfache Getriebevorrichtung mit Leistungsverzweigung zur Verfügung zu stellen.

Erfindungsgemäß wird diese Aufgabe mit einer Getriebevorrichtung mit den Merkmalen des Patentanspruchs 1 gelöst.

Bei der Getriebevorrichtung mit Leistungsverzweigung ist ein Teil eines anliegenden Drehmomentes in einem ersten Leistungszweig wenigstens über eine Hydrostateinrichtung mit wenigstens zwei Hydrostatwellen und der andere Teil des Drehmomentes in einem zweiten Leistungszweig vorzugsweise über eine mechanische Einrichtung mit mehreren Vorgelegewellen zwischen einem Getriebeeingang und einem Getriebeausgang führbar. Es sind jeweils wenigstens zwei Fahrbereiche für Vorwärts- und Rückwärtsfahrt vorgesehen, die jeweils über wenigstens ein abzuschaltendes Schaltelement und wenigstens ein zuzuschaltendes Schaltelement umschaltbar sind.

Erfindungsgemäß ist jedes der Schaltelemente auf einer separaten Vorgelegewelle Einrichtung angeordnet.

Dadurch, dass die Schaltelemente alle jeweils auf einer separaten Welle und insbesondere nicht auf einer Hydrostatwelle der Hydrostateinrichtung angeordnet sind, ist die Hydrostatwelle mit geringem konstruktivem Aufwand mit einem Getriebeausgang der Getriebevorrichtung in Wirkverbindung bringbar.

Des Weiteren ist die erfindungsgemäße Getriebevorrichtung auch durch einen geringen Bauraumbedarf gekennzeichnet, da die Hydrostatwellen der Hydrostateinrichtung im Vergleich zu dem aus dem Stand der Technik bekannten Leistungsverzweigungsgetriebe mit geringerem Abstand zueinander anordenbar sind.

Die erfindungsgemäße Ausgestaltung der Getriebevorrichtung bietet auch auf konstruktiv einfache Art und Weise die Möglichkeit, die Getriebevorrichtung mit mehr als zwei Fahrbereichen für Vorwärts- und Rückwärtsfahrt auszuführen.

Zur Leistungsverzweigung und zur Summierung der über die Leistungszweige führbaren Teile des anliegenden Drehmomentes ist eine als Planetengetriebe ausgebildete Getriebeeinrichtung vorgesehen, welche zwei Sonnenräder aufweist, die mit gemeinsamen Doppelplanetenrädern in Eingriff stehen, die wiederum mit einem Hohlrad kämmen. Eine in radialer Richtung einen geringen Bauraum aufweisende Planetengetriebeeinrichtung ist auf einfache Art und Weise neben weiteren koaxial angeordneten Zahnrädern anordenbar, die mit weiteren Zahnrädern, welche auf parallel angeordneten Vorgelegewellen gelagert sind, in Eingriff stehen. Der geringe radiale Bauraumbedarf ermöglicht eine in axialer Richtung bauraumgünstige Anordnung der verschiedenen Zahnradpaarungen, womit die Getriebevorrichtung insgesamt in axialer Richtung wenig Bauraum beansprucht.

Bei der erfindungsgemäßen Getriebevorrichtung steht eine mit der zugeordneten Vorgelegewelle verbundene Schaltelementhälfte, vorzugsweise der Innenlamellenträger, eines ersten Schaltelementes, über welches der erste Fahrbereich in zugeschaltetem Betriebszustand des Schaltelementes darstellbar ist, über ein Zahnrad der Vorgelegewelle mit der Abtriebswelle in Wirkverbindung. Dadurch wird mit konstruktiv geringem Aufwand erreicht, dass im Bereich des ersten Schaltelementes bei hohen Fahrgeschwindigkeiten eine geringe Taumelneigung vorliegt und daraus resultierende Schleppmomente im Bereich des ersten Schaltelementes, die einen Wirkungsgrad der Getriebevorrichtung verschlechtern, reduziert sind bzw. thermische Zerstörung der Kupplung vermieden wird.

Ein Innenlamellenträger oder ein Außenlamellenträger des ersten Schaltelementes ist mit der Vorgelegewelle und der Außenlamellenträger oder der Innenlamellenträger ist mit einem über das erste Schaltelement mit der zugeordneten Vorgelegewelle koppelbaren Zahnrad verbindbar.

Ein über ein zweites Schaltelement, über welches der zweite Fahrbereich in zugeschaltetem Betriebszustand des zweiten Schaltelementes darstellbar ist, mit der zugeordneten Vorgelegewelle drehfest verbindbares Losrad kämmt bei einer weiteren vorteilhaften Ausführungsform der erfindungsgemäßen Getriebevorrichtung mit einem drehfest mit dem zweiten Sonnenrad der Getriebeeinrichtung verbundenen Festrad und ein Festrad der Vorgelegewelle steht mit dem Zahnrad der dem ersten Schaltelement zugeordneten Vorgelegewelle in Wirkverbindung, womit der zweite Fahrbereich mit einer geringen Anzahl von Zahneingriffen im Bereich der mechanischen Einrichtung darstellbar ist.

Bei der Getriebevorrichtung nach der Erfindung ist zur Darstellung eines dritten Fahrbereiches ein weiteres auf einer zusätzlichen Vorgelegewelle des vorzugsweise mechanischen zweiten Leistungszweiges angeordnetes Schaltelement vorgesehen, welche ohne aufwändige konstruktive Maßnahmen in das bestehende Konzept der erfindungsgemäßen Getriebevorrichtung integrierbar ist, womit die erfindungsgemäße Getriebevorrichtung durch eine hohe Modularität gekennzeichnet ist und auf einfache Art und Weise an verschiedene Anwendungsfälle anpassbar ist.

Ein über das dritte Schaltelement, über welches der dritte Fahrbereich in zugeschaltetem Betriebszustand des dritten Schaltelementes darstellbar ist, mit der zugeordneten Vorgelegewelle drehfest verbindbares Losrad kämmt bei einer weiteren vorteilhaften Ausführungsform der erfindungsgemäßen Getriebevorrichtung mit einem weiteren Festrad der der Hydrostateinrichtung zugeordneten Welle und ein Festrad der Vorgelegewelle ist mit der Abtriebswelle wirkverbunden, womit der dritte Fahrbereich ebenfalls mit einer möglichst geringen Anzahl von Zahneingriffen im Bereich der mechanischen Einrichtung darstellbar ist.

In einem ersten und in einem dritten Fahrbereich der Getriebevorrichtung ist die Leistung der beiden Leistungszweige über eine mit der Hydrostateinrichtung verbundenen Welle summierbar.

Ein Festrad eines Getriebeeingangs ist über ein Festrad einer weiteren Vorgelegewelle mit einer Hydraulikpumpe einer ersten Arbeitshydraulik und über ein Festrad einer zusätzlichen Vorgelegewelle mit einer Hydraulikpumpe einer zweiten Arbeitshydraulik verbindbar, wobei die Hydraulikpumpen in Abhängigkeit der Übersetzungen zwischen dem Festrad der Getriebeeingangswelle und den Festrädern der weiteren Vorgelegewellen jeweils mit der gleichen Drehzahl oder mit verschiedenen Drehzahlen antreibbar sind.

Eine konstruktiv einfache und mit geringem Aufwand betätigbare Ausgestaltung der erfindungsgemäßen Getriebevorrichtung ist dadurch gekennzeichnet, dass der Getriebeeingang über Fahrtrichtungsschaltelemente mit dem Planetenträger des Planetengetriebes in Wirkverbindung bringbar ist.

Um die erfindungsgemäße Getriebevorrichtung mit geringem konstruktivem Aufwand an einen im Fahrzeug vorhandenen Bauraum anpassen zu können sind entweder die Festräder zwischen den Fahrtrichtungsschaltelementen und einem Getriebeeingang oder die Fahrtrichtungsschaltelemente zwischen den Festrädern und dem Getriebeeingang angeordnet.

Bei einer weiteren vorteilhaften Ausführungsform ist über die zwischen dem Getriebeeingang und der Getriebeeinrichtung bzw. dem Planetengetriebe angeordneten Fahrtrichtungsschaltelemente zwischen einem Modus für Vorwärtsfahrt und einem Modus für Rückwärtsfahrt umschaltbar. Damit ist ein mit der erfindungsgemäßen Getriebevorrichtung ausgebildetes Fahrzeug mit geringem konstruktiven Aufwand sowie niedrigem Steuer- und Regelaufwand sowohl in Vorwärts- als auch in Rückwärtsfahrtrichtung betreibbar.

Eine mit geringem Steuer- und Regelaufwand betreibbare Ausführungsform der Getriebevorrichtung ist im Bereich der Hydrostateinrichtung des ersten Leistungszweiges mit wenigstens einer ersten als Pumpe und als Motor betreibbaren Hydraulikeinheit und mit wenigstens einer über einen hydraulischen Kreislauf damit wirkverbundenen ebenfalls als Motor und als Pumpe betreibbaren zweiten Hydraulikeinheit ausgebildet, die beide verstellbar und vorzugsweise als Schrägachseneinheiten ausgeführt sind.

Um die Übersetzung der Getriebevorrichtung nach der Erfindung sowohl innerhalb eines Fahrbereiches sowie über alle Fahrbereiche hinweg stufenlos verändern zu können, sind ein Schluckvolumen und ein Fördervolumen der Hydraulikeinheiten bei einer vorteilhaften Ausführungsform der Getriebevorrichtung in einem Bereich von 0 % bis 100 % variierbar, wobei das anstehende Drehmoment bei maximalem Schluckvolumen einer Hydraulikeinheit und minimalem Fördervolumen der anderen Hydraulikeinheit vollständig über den die Hydrostateinrichtung aufweisenden ersten Leistungszweig und bei minimalem Schluckvolumen einer Hydraulikeinheit und maximalen Fördervolumen der anderen Hydraulikeinheit vollständig über den die mechanische Einheit aufweisenden zweiten Leistungszweig geführt wird.

Bei einer konstruktiv einfach ausgeführten Weiterbildung der erfindungsgemäßen Getriebevorrichtung ist die erste Hydraulikeinheit der Hydrostateinrichtung mit einem der Sonnenräder der Getriebeeinrichtung verbunden.

Wenigstens ein Teil des anliegenden Drehmoments ist bei einer weiteren konstruktiv einfach ausgebildeten Ausführungsform der erfindungsgemäßen Getriebevorrichtung über eines der Sonnenräder der Getriebeeinrichtung oder das Hohlrad in den die vorzugsweise mechanische Einrichtung aufweisenden zweiten Leistungszweig einleitbar.

Sind die Fahrbereichwechsel in der erfindungsgemäßen Getriebevorrichtung synchron durchführbar, sind die jeweils für die Umschaltung zwischen den Fahrbereichen vorgesehenen Schaltelemente bei einer Ausführung als Reibschaltelemente mit geringen Abmessungen dimensionierbar, da während der Umschaltvorgänge zwischen den Fahrbereichen nur geringe Reibarbeit im Bereich der Schaltelemente zu verrichten ist und daher auch nur wenig Reibleistung im Bereich der Schaltelemente entsteht.

Weitere Vorteile und vorteilhafte Ausführungsformen der erfindungsgemäßen Getriebevorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: ein nicht geschütztes Getriebeschema einer ersten Ausführungsform einer Getriebevorrichtung mit Leistungsverzweigung mit synchronem Bereichswechsel;
- Fig. 2: eine Fig. 1 entsprechende nicht geschützte Darstellung einer zweiten Ausführungsform der Getriebevorrichtung;
- Fig. 3: eine Fig. 1 entsprechende Darstellung einer Ausführungsform der erfindungsgemäßen Getriebevorrichtung;
- Fig. 4: eine Fig. 1 entsprechende nicht geschützte Darstellung einer Ausführungsform der Getriebevorrichtung;
- Fig. 5: eine Fig. 1 entsprechende Darstellung einer weiteren Ausführungsform der erfindungsgemäßen Vorrichtung; und
- Fig. 6: eine nicht geschützte Ausführungsform der Getriebevorrichtung in einer Fig. 1 entsprechenden Darstellung.

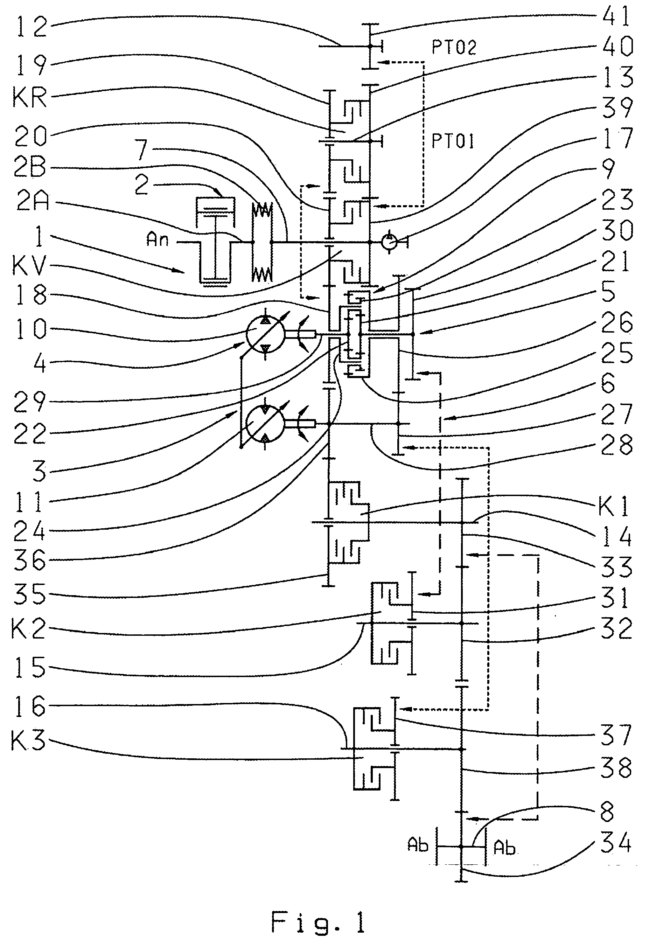

In Fig. 1 ist ein Räderschema einer ersten Ausführungsform einer Getriebevorrichtung 1 mit Leistungsverzweigung und mit synchronem Bereichswechsel dargestellt. Ein Teil eines von einer Antriebsmaschine 2 anliegenden Drehmomentes ist in einem ersten Leistungszweig 3 über eine Hydrostateinrichtung 4 und der andere Teil des Drehmoments in einem zweiten Leistungszweig 5 über eine mechanische Einrichtung 6 zwischen einem Getriebeeingang bzw. einer Getriebeeingangswelle 7 und einem Getriebeausgang bzw. einer Getriebeausgangswelle 8 führbar. Die beiden Leistungszweige 3 und 5 stehen über eine vorliegend als Planetengetriebe ausgebildete Getriebeeinrichtung 9 in Wirkverbindung.

Zwischen einer Motorausgangswelle 2A und der Getriebeeingangswelle 7 ist ein so genannter Schwingungsdämpfer 2B angeordnet, mittels welchem Drehungleichförmigkeiten im Bereich der Antriebsmaschine 2 gedämpft und nur zu einem geringen Teil in die Getriebevorrichtung 1 und den restlichen Teil des Antriebsstranges eines Fahrzeuges bzw. eines Baufahrzeuges eingeleitet werden.

Die Getriebevorrichtung 1 ist mit drei Fahrbereichen für Vorwärts- und Rückwärtsfahrt ausgeführt, welche jeweils über ein abzuschaltendes Schaltelement K1, K2 oder K3 und wenigstens ein zuzuschaltendes Schaltelement K1, K2 oder K3 umschaltbar sind.

Die Hydrostateinrichtung 4 des ersten Leistungszweiges 3 umfasst eine erste Hydraulikeinheit 10 und eine über einen in der Zeichnung nicht näher dargestellten hydraulischen Kreislauf damit wirkverbundene zweite Hydraulikeinheit 11, die über ein gemeinsames Joch verstellt werden und als Schrägachseneinheiten ausgeführt sind. Die beiden Hydraulikeinheiten 10 und 11 sind jeweils als Pumpe und als Motor betreibbar, wobei die Betriebsart in Abhängigkeit des jeweils in der Getriebevorrichtung 1 eingelegten Fahrbereiches in der später beschriebenen Art und Weise wechselt.

Zusätzlich ist die Getriebevorrichtung 1 als Vorgelegegetriebe mit mehreren zueinander beabstandeten Vorgelegewellen 12 bis 16 ausgebildet, womit die Getriebevorrichtung 1 in axialer Richtung einen geringen Bauraumbedarf und in radialer Richtung bzw. in Einbaulage in Hochrichtung einen hohen Bauraumbedarf aufweisen, wobei dieser zur Überbrückung eines Achsabstandes zwischen der Motorausgangswelle 2A der Antriebsmaschine 2 und der Getriebeausgangswelle 8 sowie den Antriebsachsen des vorliegend als Radlader ausgeführten Fahrzeuges vorgesehen ist.

Zwischen dem Getriebeeingang 7 und dem Plantetengetriebe 9 sind zwei Fahrtrichtungsschaltelemente KR und KV vorgesehen, mittels welchen zwischen einem Modus für Vorwärtsfahrt und einem Modus für Rückwärtsfahrt umgeschaltet werden kann. Im Bereich der dem Fahrtrichtungsschaltelement KR für Rückwärtsfahrt zugeordneten Vorgelegewelle 13 ist eine Hydraulikpümpe einer ersten Arbeitshydraulik und im Bereich der Vorgelegewelle 12 ist eine Hydraulikpumpe einer zweiten Arbeitshydraulik ankoppelbar und über die Antriebsmaschine 2 antreibbar. Ein Festrad 39 der Getriebeeingangswelle 7 steht hierfür mit einem Festrad 40 der weiteren Vorgelegewelle 13 und mit einem Festrad 41 der zusätzlichen Vorgelegewelle 12 in Eingriff. Im Bereich der Getriebeeingangswelle 7 ist eine Getriebepumpe 17 angeordnet, die direkt von der Antriebsmaschine 2 angetrieben wird.

Über die Getriebepumpe 17 ist neben einem die beiden Hydrostateinheiten 10 und 11 der Hydrostateinrichtung 4 miteinander verbindenden hydraulischen Kreislauf, der als geschlossener Kreislauf ausgebildet ist, auch ein Schmier- und Kühlkreislauf der Getriebevorrichtung 1 mit Hydraulikfluid beaufschlagbar. Zusätzlich sind die Schaltelemente K1 bis K3 sowie die Fahrtrichtungsschaltelemente KR und KV über die Getriebepumpe 17 mit hydraulischem Arbeitsdruck beaufschlagbar und von einem im Wesentlichen geöffneten Betriebszustand in einen im Wesentlichen vollständig geschlossenen Betriebszustand überführbar.

Sowohl die Schaltelemente K1 bis K3 als auch die Fahrtrichtungsschaltelemente KR und KV sind als reibschlüssige Lastschaltelemente ausgebildet, womit während der synchronen Bereichswechsel trotzdem eventuell vorliegende Differenzdrehzahlen im Bereich der Schaltelemente K1 bis K3 und der Fahrtrichtungsschaltelemente KR und KV ausgleichbar sind.

Das Planetengetriebe 9 weist vorliegend zwei Sonnenräder 21, 22 auf, welche mit gemeinsamen Doppelplanetenrädern 23 kämmen, die wiederum auf einem Planetenträger 24 drehbar gelagert sind. Die Getriebeeingangswelle 7 ist über die Fahrtrichtungsschaltelemente KV und KR und über ein Zahnrad 18, das sowohl mit einem mit der Vorgelegewelle 13 über das Fahrtrichtungsschaltelement KR drehfest verbindbaren Losrad 19 oder einem über das Fahrtrichtungsschaltelement KV drehfest mit der Getriebeeingangswelle 7 verbindbaren weiteren Losrad 20 kämmt, mit dem Planetenträger 24 in Wirkverbindung bringbar. Zusätzlich kämmen die Doppelplanetenräder 23 mit einem Hohlrad 25, das über ein Festrad 26 mit einem weiteren Festrad 27 einer mit der zweiten Hydraulikeinheit 11 wirkverbundenen Hydrostatwelle 28 der Hydrostateinrichtung 4 in Eingriff steht.

Die erste Hydrostateinheit 10 ist vorliegend über eine weitere Hydrostatwelle 29 drehfest mit dem zweiten Sonnenrad 22 des Planetengetriebes 9 verbunden.

In Abhängigkeit des Schluckvolumens der ersten Hydraulikeinheit 10 bzw. der zweiten Hydraulikeinheit 11 und eines Fördervolumens der zweiten Hydraulikeinheit 11 bzw. der ersten Hydraulikeinheit 10 ist im zweiten Fahrbereich jeweils wenigstens ein Teil des von der Antriebsmaschine 2 anliegenden Drehmomentes über den Planetenträger 24 des Planetengetriebes 9 und die Doppelplanetenräder 23 sowie das Hohlrad 25 oder auf das erste Sonnenrad 21 des Planetengetriebes 9 und ein damit drehfest verbundenes Festrad 30 in den die mechanische Einrichtung 6 aufweisenden zweiten Leistungszweig 5 einleitbar.

Grundsätzlich wird der Antrieb der Antriebsmaschine 2 bei dem in Fig. 1 dargestellten Ausführungsbeispiel der Getriebevorrichtung 1 über das Fahrtrichtungsschaltelement KR oder KV in den Planetenträger 24 des Planetengetriebes 9 eingeleitet. Ausgehend vom Planetenträger 24 wird ein in Abhängigkeit des Betriebszustandes der Hydrostateinrichtung 4 stehender Teil des Antriebsmomentes der Antriebsmaschine 2 bei geschlossenem ersten Schaltelement K1, über welches der erste Fahrbereich in der Getriebevorrichtung 1 einlegbar ist, über die Doppelplanetenräder 23 und das zweite Sonnenrad 22 in die erste Hydraulikeinheit 10 eingeleitet, die bei eingelegtem ersten Fahrbereich als Pumpe betrieben wird. Der mechanische Antrieb erfolgt dann über das Hohlrad 25 und das damit drehfest verbundene Festrad 26, das mit dem Festrad 27 der ersten Hydrostatwelle 28 kämmt.

Über das erste Schaltelement K1 ist ein Losrad 35 drehfest mit der Vorlegewelle 14 verbindbar, womit das Antriebsmoment der Antriebsmaschine 2 von einem mit dem Losrad 35 kämmenden weiteren Festrad 36 der Hydrostatwelle 28 auf ein Festrad 33 der Vorgelegewelle 14 und das damit kämmende Festrad 34 der Getriebeausgangswelle 8 führbar ist.

Steht die dann als Motor betriebene zweite Hydraulikeinheit 11 still und läuft die als Pumpe betriebene erste Hydrostateinheit 10 mit maximaler Drehzahl, ist das Schluckvolumen der zweiten Hydrostateinheit 11 maximal, während das Fördervolumen der ersten Hydrostateinheit gleich Null ist. Die Antriebsleistung der Antriebsmaschine 2 wird dann vollständig hydrostatisch über die Getriebeeinrichtung 1 übertragen, wobei dies der ersten Grenze des ersten Fahrbereiches entspricht.

Die zweite Grenze des über das Schaltelement K1 einstellbaren ersten Fahrbereiches liegt dann vor, wenn die als Pumpe betriebene erste Hydraulikeinheit 10 stillsteht und die Drehzahl der als Motor betriebenen zweiten Hydraulikeinheit 11 maximal ist, wobei das Schluckvolumen der zweiten Hydraulikeinheit 11 dann gleich Null ist und das Fördervolumen der ersten Hydraulikeinheit 10 einen maximalen Wert aufweist. In diesem Betriebszustand des Hydrostaten 4 wird die Antriebsleistung der Antriebsmaschine 2 über die Getriebevorrichtung 1 vollständig mechanisch zwischen der Getriebeeingangswelle 7 und der Getriebeausgangswelle 8 übertragen.

Liegt eine entsprechende Anforderung zum Einlegen des zweiten Fahrbereiches in der Getriebevorrichtung 1 vor, werden die beiden Hydraulikeinheiten 10 und 11 verschwenkt, bis das zweite Schaltelement K2 im Wesentlichen im synchronen Betriebszustand vorliegt. Anschließend wird das Schaltelement K2 geschlossen und gleichzeitig das erste Schaltelement K1 geöffnet. Bei eingelegtem zweiten Fahrbereich wird die erste Hydraulikeinheit 10 motorisch und die zweite Hydraulikeinheit 11 als Pumpe betrieben, womit das Antriebsmoment der Antriebsmaschine 2 über den Planetenträger 24, die Doppelplanetenräder 23, das Hohlrad 25, das Festrad 26, das weitere Festrad 27 und die Hydrostatwelle 28 zumindest zu einem Teil in die zweite Hydrostateinheit 11 eingeleitet wird.

In Abhängigkeit der Schwenkstellung der beiden Hydrostateinheiten 10 und 11 wird ein damit korrespondierender Anteil des Antriebsmomentes der Antriebsmaschine 2 an die erste Hydrostateinheit 10 weitergeleitet und über die Hydrostatwelle 29 und das zweite Sonnenrad 22 auf die Doppelplanetenräder 23 weitergeleitet. Das ebenfalls mit den Doppelplanetenrädern 23 kämmende zweite Sonnenrad 21 kämmt über das Festrad 30 mit einem in geschlossenem Betriebszustand des zweiten Schaltelementes K2 drehfest mit der Vorgelegewelle 15 verbundenen Losrad 31, womit das Antriebsmoment der Antriebsmaschine 2 über ein Festrad 32 der Vorgelegewelle 15 auf das damit kämmende Festrad 33 der Vorgelegewelle 14 weitergeleitet wird. Das Festrad 33 der Vorgelegewelle 14 kämmt wiederum mit einem Festrad 34 der Getriebeausgangswelle 8, von welcher der Abtrieb des mit der Getriebevorrichtung 1 ausgeführten Fahrzeuges angetrieben wird.

Liegt wiederum eine Anforderung für einen Fahrbereichswechsel ausgehend vom zweiten Fahrbereich in den dritten Fahrbereich vor, wird die Hydrostateinrichtung 4 entsprechend verstellt, um das dritte Schaltelement K3 bei noch geschlossenem zweitem Schaltelement K2 in einen synchronen Betriebszustand zu überführen. Liegt das dritte Schaltelement K3 wenigstens annähernd in seinem synchronen Betriebszustand vor, wird dieses geschlossen und das zweite Schaltelement K2 in seinen geöffneten Betriebszustand überführt, wobei durch das Schließen des dritten Schaltelements K3 ein Losrad 37 drehfest mit der Vorgelegewelle 16 verbunden wird, das mit dem Festrad 27 der Hydrostatwelle 28 kämmt. Damit wird ein mit dem Festrad 34 der Getriebeausgangswelle 8 kämmendes Festrad 38 der Vorgelegewelle 16 mit der zweiten Hydraulikeinheit 11 gekoppelt, die bei eingelegtem dritten Fahrbereich wiederum motorisch betrieben wird, während die erste Hydraulikeinheit 10 wie bei eingelegtem ersten Fahrbereich in den Pumpenbetrieb übergeht.

In dem über das erste Schaltelement K1 zuschaltbaren ersten Fahrbereich ist in der Getriebevorrichtung 1 die größte Übersetzung einstellbar, während in dem über das zweite Schaltelement K2 zuschaltbaren zweiten Fahrbereich ein mittlerer und in dem über das dritte Schaltelement K3 zuschaltbaren dritten Fahrbereich der kleinste Übersetzungsbereich in der Getriebevorrichtung 1 einstellbar ist. Die drei Fahrbereiche sind derart ausgelegt, dass sich der erste Fahr- bzw. Übersetzungsbereich und der zweite Übersetzungsbereich sowie der zweite Übersetzungsbereich und der dritte Übersetzungsbereich überlappen und die Übersetzungen der Getriebevorrichtung 1 über den gesamten Übersetzungsbereich der Getriebevorrichtung 1, der sich vom unteren Grenzwert der Übersetzung des ersten Fahrbereichs bis zum oberen Grenzwert der Übersetzung des dritten Fahrbereichs erstreckt, stufenlos und für den Fahrer eines mit der Getriebevorrichtung ausgeführten Fahrzeuges nicht merkbar sowie zugkraftunterbrechungsfrei veränderbar ist.

Die im Baumaschinenbereich einsetzbare Getriebevorrichtung 1 stellt ein stufenlos verstellbares Getriebe dar, mittels dem hohe Zugkräfte und Fahrgeschwindigkeiten von vorzugsweise bis zu 40 km/h realisierbar sind. Alle Schaltelemente K1 bis K3 sind auf separaten Vorgelegewellen 14, 15 und 16 angeordnet, womit bei der Anwendung der Getriebevorrichtung 1 im Baumaschinenbereich mit niedrigeren Zugkraftanforderungen die Getriebevorrichtung auf einfache Art und Weise als Zweibereichsgetriebe darstellbar ist, das dann ohne die Vorgelegewelle 16, das dritte Schaltelement K3, das Losrad 37 und das Festrad 38 ausgebildet ist. Die Getriebevorrichtung 1 stellt somit eine hohe Modularität zur Verfügung und ist ohne Änderungen des Getriebegehäuses sowie der Anschlüsse der Getriebeausgangswelle 8 sowohl als Dreibereichsgetriebe als auch als Zweibereichsgetriebe bei gleichem Bauraumbedarf zur Verfügung stellbar.

Des Weiteren sind die verschiedenen Fahrbereiche in der Getriebevorrichtung 1 mit wenigen Zahneingriffen, das heißt vorliegend jeweils in Vorwärtsfahrtrichtung vier Zahneingriffe und in Rückwärtsfahrtrichtung fünf Zahneingriffe ohne die im Bereich des Planetengetriebes 9 vorliegenden Zahnradeingriffe darstellbar.

Da die drei Bereichsübergänge zwischen den Fahrbereichen jeweils im synchronen Betriebszustand der Schaltelemente K1 bis K3, das heißt sowohl bei einem Hochschalten als auch bei einem Rückschalten zwischen den drei Fahrbereichen, synchron durchführbar sind, besteht auf einfache Art und Weise die Möglichkeit, die Schaltelement K1 bis K3 mit geringerer Leistungsfähigkeit auszuführen und zu dimensionieren, da jeweils nur eine geringe Reibarbeit von den Schaltelementen K1 bis K3 zu leisten ist und jeweils eine stark herabgesetzte Reibleistung im Vergleich zu nicht synchronen Bereichswechseln von den Schaltelementen K1 bis K3 aufgenommen werden muss.

Aufgrund der Anordnung des dritten Schaltelementes K3 auf der separaten Vorgelegewelle 16 und nicht wie bei aus der Praxis bekannten Getriebevorrichtungen auf der Hydrostatwelle 28 der Hydrostateinrichtung 4, liegen bei eingelegtem dritten Fahrbereich an den leistungsführenden Bauteilen niedrigere Drehzahlen an, womit eine Belastung dieser Bauteile verringert ist.

Zusätzlich ist über den gesamten Betriebsbereich der Getriebevorrichtung 1 gewährleistet, dass das Antriebsmoment der Antriebsmaschine 2 von der Getriebeeingangswelle 7 auf die Getriebeausgangswelle 8 geleitet wird und dabei keines der Losräder einer dynamischen Belastung ausgesetzt ist.

Des Weiteren ist vorliegend ein Innenlamellenträger des ersten Schaltelementes K1 mit dem Abtrieb bzw. der Getriebeausgangswelle 8 gekoppelt, womit insbesondere bei hohen Fahrgeschwindigkeiten eines mit der Getriebevorrichtung 1 ausgebildeten Fahrzeuges im Bereich des ersten Schaltelementes K1 eine geringere Taumelneigung erzielt wird.

Bei in der Getriebevorrichtung 1 eingelegtem ersten Fahrbereich überträgt der mechanische Leistungszweig 5 Drehmoment vom Hohlrad 25 über das Festrad 26 auf das weitere Festrad 27. Hierbei findet eine Abzweigung vom Hohlrad 25 statt. Der hydrostatische Leistungszweig 3 wird vom zweiten Sonnenrad 22 abgezweigt. Dabei überträgt der hydrostatische Leistungszweig Leistung von der ersten Hydraulikeinheit 10 zur zweiten Hydraulikeinheit 11. Dabei wirkt die erste Hydraulikeinheit 10 als Pumpe und die zweite Hydraulikeinheit als Motor. Auf der ersten Hydrostatwelle 28 werden die mechanische Leistung und die hydrostatische Leistung summiert und über das Festrad 36 zum Abtrieb geführt. Im zweiten Fahrbereich wird die vom Planetenträger 24 kommende Leistung teilweise zum Hohlrad 25 verzweigt und über die Räder 26 und 27 auf die erste Hydrostatwelle 28 zur zweiten Hydraulikeinheit 11 geführt. Von der zweiten Hydraulikeinheit 11 wird die hydraulische Leistung zur ersten Hydraulikeinheit 10 geführt. Hierbei wirkt die erste Hydraulikeinheit 10 als Motor und die zweite Hydraulikeinheit als Pumpe. Vom zweiten Sonnenrad 22 wird die Leistung dann zum Doppelplanetenrad 23 geführt und dort summiert. Die Summenleistung wird vom ersten Sonnenrad 21 und dann vom Rad 30 zum Abtrieb geführt. Im dritten Fahrbereich wird die Leistung wie im ersten Fahrbereich geführt, wobei die Summenleistung vom Rad 27 zum Abtrieb geführt wird.

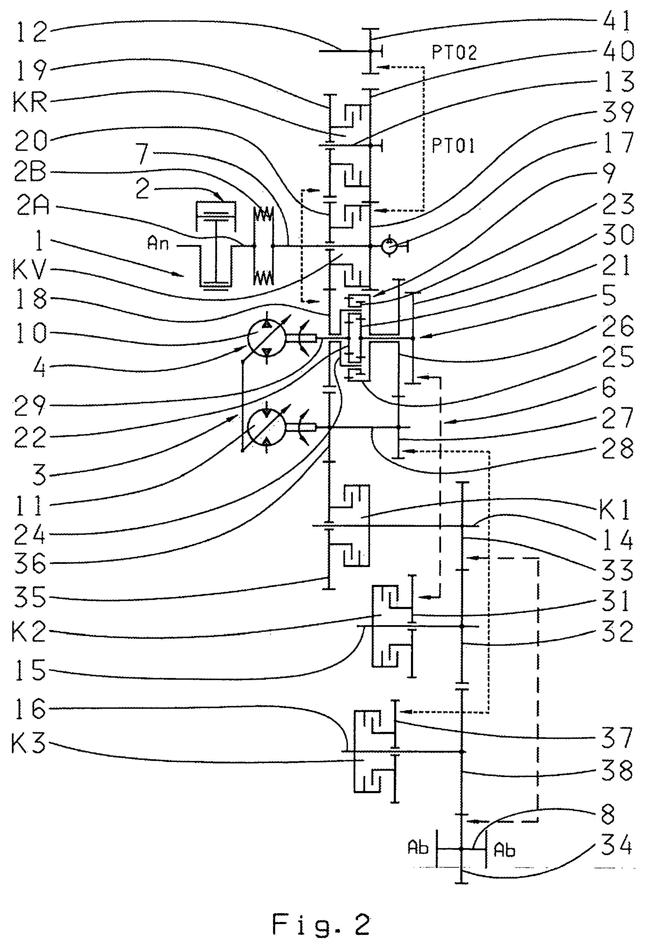

In Fig. 2 bis Fig. 6 sind jeweils Räderschemata von fünf weiteren Ausführungsformen der Getriebevorrichtung 1 gezeigt, welche sich jeweils nur in Teilbereichen von dem in Fig. 1 dargestellten ersten Ausführungsbeispiel der Getriebevorrichtung 1 unterscheiden, weshalb in der nachfolgenden Beschreibung zur Fig. 2 bis Fig. 6 jeweils nur auf die Unterschiede zu der ersten Ausführungsform der Getriebevorrichturig 1 eingegangen wird und bezüglich der grundlegenden Funktionsweise der Getriebevorrichtung 1 auf die vorstehende Beschreibung zu Fig. 1 verwiesen wird.

Bei dem in Fig. 2 dargestellten zweiten Ausführungsbeispiel der Getriebevorrichtung 1 ist der Außenlamellenträger des ersten Schaltelementes K1 drehfest mit der Vorgelegewelle 14 verbunden, während der Innenlamellenträger drehfest mit dem als Losrad ausgeführten Zahnrad 35 gekoppelt ist. Dies führt dazu, dass bei eingelegtem dritten Fahrbereich die hohen Rückdrehzahlen ausgehend vom Festrad 34 über das Zahnrad 33 am Außenlamellenträger des ersten Schaltelementes K1 anliegen.

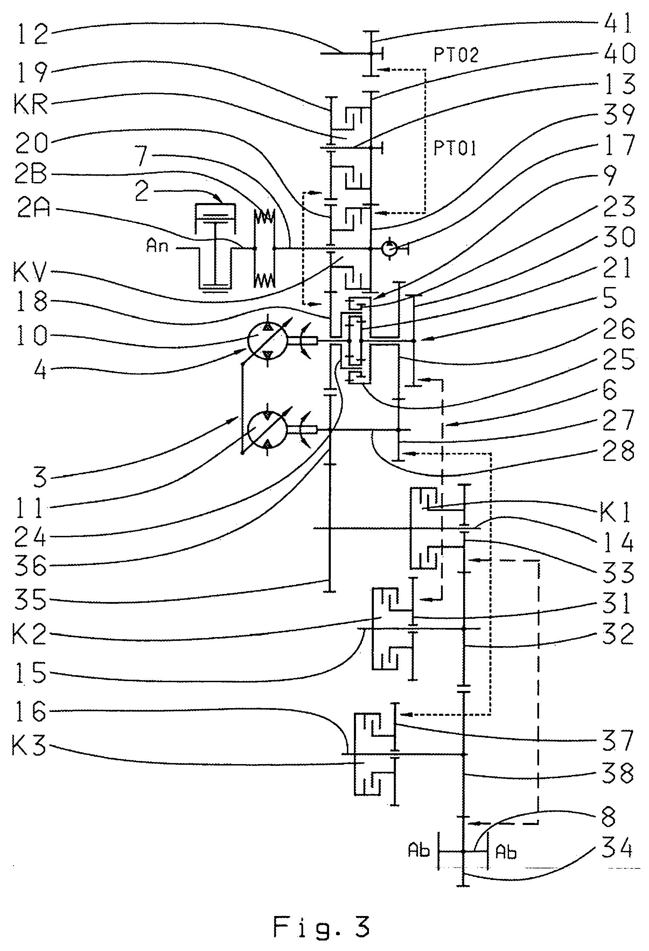

Bei dem in Fig. 3 dargestellten Ausführungsbeispiel der Getriebevorrichtung 1 ist das Zahnrad 35 der dem ersten Schaltelement K1 zugeordneten Vorgelegewelle 14 als Festrad ausgeführt, während das Zahnrad 33 als Losrad drehbar auf der Vorgelegewelle 14 gelagert ist und über das erste Schaltelement K1 zur Darstellung des ersten Fahrbereiches drehfest mit der Vorgelegewelle 14 verbindbar ist. Der Außenlamellenträger des ersten Schaltelementes K1 ist drehfest mit der Vorgelegewelle verbunden, während der Innenlamellenträger fest mit dem Zahnrad 33 verbunden ist.

Bei dieser konstruktiven Ausführungsform der Getriebevorrichtung 1 ist das Zahnrad 33 während der Darstellung des zweiten Fahrbereiches dynamisch belastet.

Bei der zweiten Ausführungsform gemäß Fig. 2 wird die Leistung im zweiten Fahrbereich im Bereich der mechanischen Einrichtung 6 vom Losrad 31 über das Festrad 32 zum Festrad 33 zum Festrad 34 der Getriebeausgangswelle 8 geführt und bei der dritten Ausführungsform gemäß Fig. 3 wird die Leistung im zweiten Fahrbereich im Bereich der mechanischen Einrichtung vom Losrad 31 über das Festrad 32 zum Losrad 33 zum Festrad 34 der Getriebeausgangswelle 8 geführt, womit die dem dritten Schaltelement K3 zugeordnete Vorgelegewelle 16 bei einer Ausführung der Getriebevorrichtung 1 als Zweibereichsgetriebe nicht erforderlich ist und somit entfallen kann.

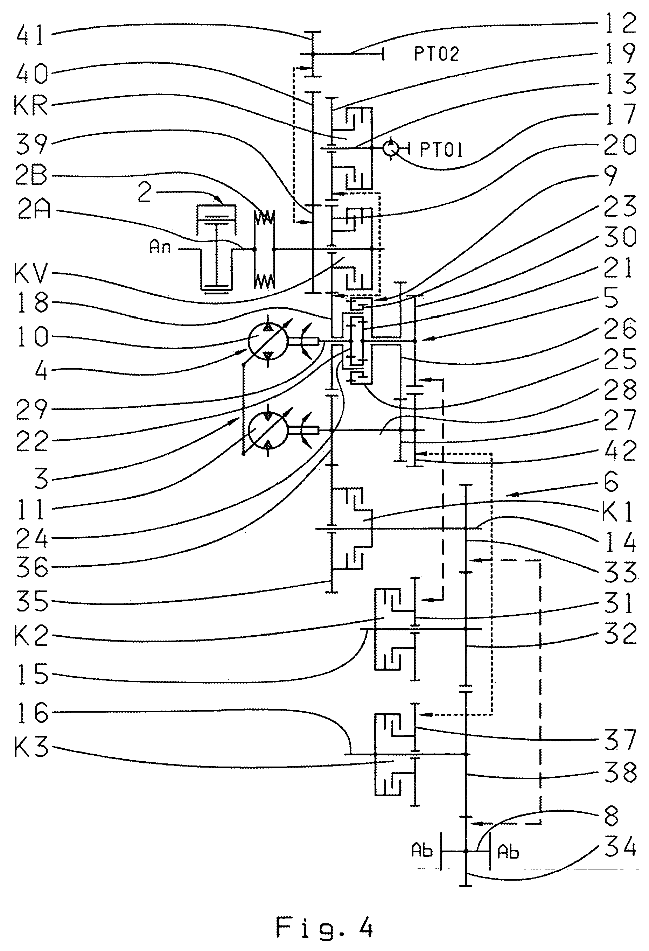

Im Vergleich zu der in Fig. 1 gezeigten ersten Ausführungsform der Getriebevorrichtung 1 ist die Getriebevorrichtung 1 gemäß Fig. 4 im Bereich der Hydrostatwelle 28 mit einem weiteren Festrad 42 ausgebildet, das anstatt dem weiteren Festrad 27 mit dem Losrad 37 der dem dritten Schaltelement K3 zugeordneten Vorgelegewelle 16 kämmt.

Damit besteht auf einfache Art und Weise die Möglichkeit, das dritte Schaltelement K3 mit der zugeordneten Vorgelegewelle 16 mit größerem Abstand zur ersten Hydrostatwelle 18 anzuordnen und die ersten Hydrostatwelle 28 mit einem an die auftretenden Belastungen angepassten Wellendurchmesser ausführen zu können, ohne den Achsabstand zwischen den Hydrostatwellen 28 und 29 in einem die hydraulischen Verluste im hydraulischen Kreislauf zwischen den beiden Hydraulikeinheiten 10 und 11 erhöhenden Umfang vergrößern zu müssen.

Das weitere Festrad 42 wird vorliegend auf konstruktiv einfache Art und Weise über einen Presssitz auf der ersten Hydrostatwelle 28 montiert und wird bei einer Ausführung der Getriebevorrichtung 1 als Zweibereichsgetriebe nicht auf der ersten Hydrostatwelle 28 verbaut.

Des Weiteren sind die Festräder 39, 40 und 41 im Gegensatz zu der Ausführung der Getriebevorrichtung 1 gemäß Fig. 1 zwischen dem Getriebeeingang 7 und den Fahrtrichtungsschaltelementen KR und KV angeordnet, womit die Getriebevorrichtung 1 auf einfache Art und Weise an in einem Fahrzeug zur Verfügung stehenden Bauraum anpassbar ist.

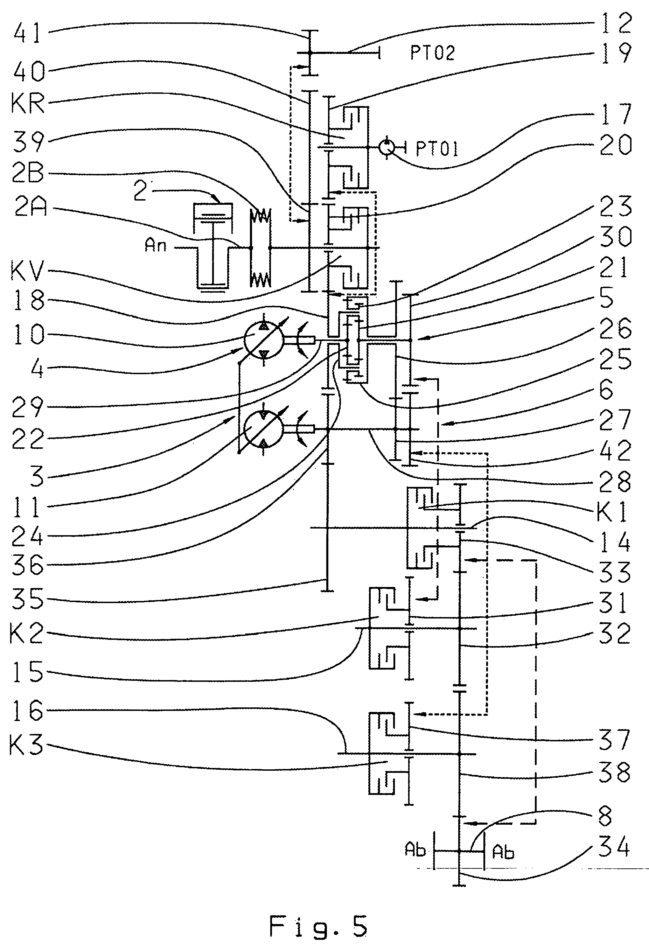

Das in Fig. 5 dargestellte Ausführungsbeispiel der Getriebevorrichtung 4 unterscheidet sich von der in Fig. 4 dargestellten Ausführungsform lediglich im Bereich der Ausgestaltung des ersten Schaltelementes K1 und der Ausführung der Zahnräder 33 und 35, wobei sowohl das erste Schaltelement K1 als auch die Zahnräder 33 und 35 der in Fig. 3 dargestellten Ausführungsform entsprechen.

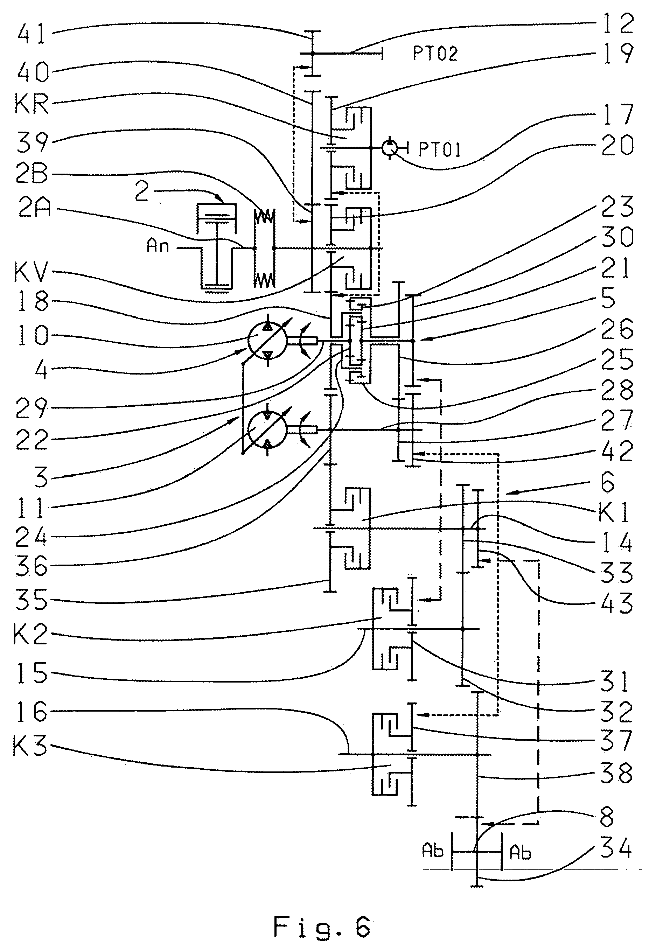

Das in Fig. 6 dargestellte Ausführungsbeispiel unterscheidet sich wiederum von der in Fig. 4 gezeigten Ausführungsform der Getriebevorrichtung 1 lediglich durch ein im Bereich der dem ersten Schaltelement K1 zugeordneten weiteren und als Festrad ausgeführten Zahnrad 43, über welches die Vorgelegewelle 14 mit dem Festrad 34 der Getriebeausgangswelle 8 kämmt.

Über das zusätzliche Zahnrad 43 im Bereich der dem ersten Schaltelement K1 zugeordneten Vorgelegewelle 14 sind bestimmte Übersetzungsvariationen in Abhängigkeit der Ausführung der Getriebevorrichtung 1 als Zwei- oder Dreibereichsgetriebe darstellbar und die jeweils notwendigen Fahrleistungsanforderungen abdeckbar. Alle weiteren Zahnradpaarungen sind dann unabhängig von der Ausführung der Getriebevorrichtung 1 als Zwei- oder Dreibereichsgetriebe identisch ausführbar.

Bei eingelegtem erstem Fahrbereich erfolgt der Leistungsfluss ausgehend vom Zahnrad 36 auf das Zahnrad 35 zum Zahnrad 43 und von dort zum Festrad 34 der Getriebeausgangswelle 8. Ist in der Getriebevorrichtung 1 der zweite Fahrbereich eingelegt, wird der Kraftfluss ausgehend vom Festrad 30 auf das vorliegend als Losrad ausgeführte Zahnrad 31, das Festrad 32 und das damit kämmende Festrad 33 und das weitere Zahnrad 43 der Vorgelegewelle auf das wiederum damit kämmende Festrad 34 der Getriebeausgangswelle 8 zum Abtrieb geführt.

Bei eingelegtem drittem Fahrbereich fließt die Leistung vom Festrad 42 der ersten Hydrostatwelle 28 auf das damit kämmende Losrad 37 des dritten Schaltelementes K3 und das Festrad 38 der Vorgelegewelle 16 auf das damit kämmende Festrad 34 der Getriebeausgangswelle 8.

Die motorseitige Anordnung der aus den Festrädern 39 bis 41 bestehenden Festräderkette bietet auf einfache Art und Weise die Möglichkeit, den mit der Vorgelegewelle 12 koppelbaren zweiten Leistungsabgriff im vorhandenen Fahrzeugeinbauraum unterzubringen. Insbesondere bei einer Anordnung der Getriebevorrichtung 1 in einem Radlader-Fahrzeugrahmen sind Kollisionen mit anderen Fahrzeugkomponenten minimiert, woraus sich erhebliche Vorteile ergeben.

Verschiedene Leistungsanforderungen an die Getriebevorrichtung 1 sind bei der erfindungsgemäßen Getriebevorrichtung unabhängig von der Ausführung als Zwei- oder als Dreibereichsgetriebe jeweils auf einfache Art und Weise durch Variieren der die Zahnräder 26 und 31 oder die Zahnräder 32, 33 und 34 umfassenden Zahnradpaarungen zur Verfügung stellbar. Bei entsprechender Auslegung dieser Zahnradpaarungen ist beispielsweise das weitere Zahnrad 43 der Getriebevorrichtung 1 gemäß Fig. 6 vermeidbar.

Die Übersetzung im Bereich der Zahnradpaarung zwischen den Zahnrädern 36 und 35 ist unabhängig von der Ausführung der Getriebevorrichtung 1 als Zwei- oder Dreibereichsgetriebe jeweils identisch ausführbar, um die Differenzdrehzahlen zwischen den Schaltelementhälften des ersten Schaltelementes K1 im geöffneten Betriebszustand während der Darstellung des zweiten Fahrbereiches oder des dritten Fahrbereiches so gering wie möglich zu halten.

Dabei wird die Übertragungsfähigkeit des ersten Schaltelementes K1 so groß wie möglich vorgesehen, um die Übersetzung der Zahnradpaarung zwischen den Zahnrädern 36 und 35 möglichst groß vorsehen zu können und die Rückdrehzahlen im Bereich des ersten Schaltelementes K1 während der Darstellung des zweiten und des dritten Fahrbereiches möglichst gering zu halten.

Grundsätzlich sind die im Bereich der Schaltelemente K1 bis K3 vorgesehenen Zahnräder 35, 33, 31, 32, 37 und 38 in Abhängigkeit des jeweils vorliegenden Anwendungsfalles als Losrad oder als Festrad ausführbar. Des Weiteren sind die Zahnräder 37 und 38 der im Bereich des dritten Schaltelementes K1 angeordneten Vorgelegewelle 16 und die Zahnräder 35 und 33 der im Bereich des ersten Schaltelementes K1 angeordneten Vorgelegewelle 14 mit dem Zahnrad 26 oder einem damit kämmenden bzw. gekoppelten Zahnrad, d. h. vorliegend das Zahnrad 27 oder das Zahnrad 36, fest in Eingriff bringbar.

### Bezugszeichen

- 1: Getriebevorrichtung
- 2: Antriebsmaschine
- 2A: Motorausgangswelle
- 2B: Schwingungsdämpfer
- 3: erster Leistungszweig
- 4: Hydrostateinrichtung
- 5: zweiter Leistungszweig
- 6: mechanische Einrichtung
- 7: Getriebeeingangswelle
- 8: Getriebeausgangswelle
- 9: Getriebeeinrichtung
- 10: erste Hydraulikeinheit
- 11: zweite Hydraulikeinheit
- 12 bis 16: Vorgelegewelle
- 17: Getriebepumpe
- 18: Zahnrad
- 19: Losrad
- 20: Losrad
- 21: erstes Sonnenrad
- 22: zweites Sonnenrad
- 23: Doppelplanetenrad
- 24: Planetenträger
- 25: Hohlrad
- 26: Festrad
- 27: weiteres Festrad
- 28: erste Hydrostatwelle
- 29: zweite Hydrostatwelle
- 30: Festrad
- 31: Losrad
- 32: Festrad
- 33: Festrad
- 34: Festrad
- 35: Losrad
- 36: Festrad
- 37: Losrad
- 38: Losrad
- 39: Festrad
- 40: Festrad
- 41: Festrad
- 42: Festrad
- 43: Zahnrad
- K1 bis K3: Schaltelement
- KR, KV: Fahrtrichtungsschaltelement

## Patentansprüche

1. Getriebevorrichtung (1) mit Leistungsverzweigung, mit einem ersten Leistungszweig (3) und mit einem zweiten Leistungszweig (5), mit einer als Planetengetriebe ausgebildeten Getriebeeinrichtung (9) zur Summierung der über die Leistungszweige (3, 5) führbaren Teile des anliegenden Drehmoments, mit einer Hydrostateinrichtung (4) mit einer ersten Hydraulikeinheit (10) und einer zweiten Hydraulikeinheit (11) wobei die erste Hydraulikeinheit (10) mit einer zweiten Hydrostatwelle (29) und die zweite Hydraulikeinheit (11) mit einer ersten Hydrostatwelle (28) verbunden ist, wobei jeweils drei Fahrbereiche für Vorwärts- und Rückwärtsfahrt vorgesehen sind, welche jeweils über wenigstens ein abzuschaltendes Schaltelement (K1 bis K3) und wenigstens ein zuzuschaltendes Schaltelement (K1 bis K3) umschaltbar sind, wobei jedes der Schaltelemente (K1 bis K3) auf einer separaten Vorgelegewelle (14, 15, 16) angeordnet ist, wobei das Planetengetriebe ein erstes und ein zweites Sonnenrad (21, 22), die mit gemeinsamen Doppelplanetenrädern (23) in Eingriff stehen, ein Hohlrad (25) und einen Planetenträger (24) aufweist, wobei das zweite Sonnenrad (22) mit der zweiten Hydrostatwelle (29) verbunden ist und das Hohlrad (25) über ein Festrad (26) und ein weiteres Festrad (27) mit der ersten Hydrostatwelle (28) verbunden ist, und die Leistung der beiden Leistungszweige (3, 5) im ersten und dritten Fahrbereich über die mit der zweiten Hydraulikeinheit (11) verbundene erste Hydrostatwelle (28) summiert wird **dadurch gekennzeichnet, dass** auf der ersten Hydrostatwelle (28) zwei Festräder (27, 36) angeordnet sind, wobei eine Schaltelementhälfte eines ersten Schaltelementes (K1), über welches der erste Fahrbereich in zugeschaltetem Betriebszustand des Schaltelementes (K1) darstellbar ist, über ein Zahnrad (33; 43) der Vorgelegewelle (14) mit der Getriebeausgangswelle (8) und eine weitere Schaltelementhälfte des ersten Schaltelementes (K1) über ein weiteres Zahnrad (35) der Vorgelegewelle (14) mit der mit der Hydrostateinrichtung (4) verbundenen Welle (28) in Wirkverbindung steht und wobei ein Innenlamellenträger oder ein Außenlamellenträger des ersten Schaltelementes (K1) mit der Vorgelegewelle (14) und der Außenlamellenträger oder der Innenlamellenträger mit einem über das erste Schaltelement (K1) mit der zugeordneten Vorgelegewelle (14) koppelbaren Zahnrad (35 oder 33) verbunden ist und wobei das über das erste Schaltelement (K1) mit der zugeordneten Vorgelegewelle (14) drehfest verbindbare Zahnrad (33) mit der Getriebeausgangswelle (8) wirkverbunden ist und das Festrad (35) der Vorgelegewelle (14) mit einem Festrad (36) der der Hydrostateinrichtung (11) zugeordneten Welle (28) kämmt.

2. Getriebevorrichtung nach Anspruch 1 , **dadurch gekennzeichnet, dass** ein über ein zweites Schaltelement (K2), über welches der zweite Fahrbereich in zugeschaltetem Betriebszustand des zweiten Schaltelementes (K2) darstellbar ist, mit der zugeordneten Vorgelegewelle (15) drehfest verbindbares Losrad (31) mit einem drehfest mit dem ersten Sonnenrad (21) der Getriebeeinrichtung (9) verbundenen Festrad (30) kämmt und ein Festrad (32) der Vorgelegewelle (15) mit einem der Zahnräder (33) der dem ersten Schaltelement (K1) zugeordneten Vorgelegewelle (14) in Wirkverbindung steht.

3. Getriebevorrichtung nach einem der Ansprüche 1 bis 2, **dadurch gekennzeichnet, dass** ein über das dritte Schaltelement (K3), über welches der dritte Fahrbereich in zugeschaltetem Betriebszustand des dritten Schaltelementes (K3) darstellbar ist, mit der zugeordneten Vorgelegewelle (16) drehfest verbindbares Losrad (37) mit einem weiteren Festrad (27; 42) der der Hydrostateinrichtung (4) zugeordneten Welle (28) kämmt und ein Festrad (38) der Vorgelegewelle (16) mit der Getriebeausgangswelle (18) wirkverbunden ist.

4. Getriebevorrichtung nach einem der Ansprüche 1 bis 3, **dadurch gekennzeichnet, dass** ein Festrad (39) eines Getriebeeingangs (7) über ein Festrad (40) einer weiteren Vorgelegewelle (13) mit einer Hydraulikpumpe einer ersten Arbeitshydraulik und über ein Festrad (41) einer zusätzlichen Vorgelegewette (12) mit einer Hydraulikpumpe einer zweiten Arbeitshydraulik verbindbar ist.

5. Getriebevorrichtung nach Anspruch 4, **dadurch gekennzeichnet, dass** der Getriebeeingang (7) über Fahrtrichtungsschaltelemente (KR, KV) mit einem Planetenträger (24) des Planetengetriebes (9) in Wirkverbindung bringbar ist.

6. Getriebevorrichtung nach Anspruch 5, **dadurch gekennzeichnet, dass** die Festräder (39, 40, 41) zwischen den Fahrtrichtungsschaltelemente (KR, KV) und dem Getriebeeingang (7) angeordnet sind.

7. Getriebevorrichtung nach Anspruch 6, **dadurch gekennzeichnet, dass** die Fahrtrichtungsschaltelemente (KR, KV) zwischen den Festrädern (39, 40, 41) und dem Getriebeeingang (7) angeordnet sind.

## Claims

1. Transmission apparatus (1) with a power split means, with a first power branch (3) and with a second power branch (5), with a transmission device (9) which is configured as a planetary gear mechanism for summing the parts of the prevailing torque which can be conducted via the power branches (3, 5), with a hydrostatic device (4) with a first hydraulic unit (10) and a second hydraulic unit (11), the first hydraulic unit (10) being connected to a second hydrostatic shaft (29) and the second hydraulic unit (11) being connected to a first hydrostatic shaft (28), in each case three driving ranges for forward and reverse driving being provided which can be switched over in each case via at least one shifting element (K1 to K3) to be switched out and at least one shifting element (K1 to K3) to be switched in, each of the shifting elements (K1 to K3) being arranged on a separate countershaft (14, 15, 16), the planetary gear mechanism having a first and a second sun gear (21, 22), which are in engagement with common double planetary gears (23), an internal gear (25) and a planetary carrier (24), the second sun gear (22) being connected to the second hydrostatic shaft (29), and the internal gear (25) being connected to the first hydrostatic shaft (28) via a fixed gear (26) and a further fixed gear (27), and the power of the two power branches (3, 5) being summed in the first and third driving range via the first hydrostatic shaft (28) which is connected to the second hydraulic unit (11), **characterized in that** two fixed gears (27, 36) are arranged on the first hydrostatic shaft (28), one shifting element half of a first shifting element (K1), via which the first driving range can be produced in the switched-in operating state of the shifting element (K1), being in operative connection via a gearwheel (33; 43) of the countershaft (14) with the transmission output shaft (8), and a further shifting element half of the first shifting element (K1) being in operative connection via a further gearwheel (35) of the countershaft (14) with the shaft (28) which is connected to the hydrostatic device (4), and an inner disc carrier or an outer disc carrier of the first shifting element (K1) being connected to the countershaft (14), and the outer disc carrier or the inner disc carrier being connected to a gearwheel (35 or 33) which can be coupled via the first shifting element (K1) to the associated countershaft (14), and the gearwheel (33) which can be connected fixedly via the first shifting element (K1) to the associated countershaft (14) so as to rotate with it being operatively connected to the transmission output shaft (8), and the fixed gear (35) of the countershaft (14) meshing with a fixed gear (36) of the shaft (28) which is assigned to the hydrostatic device (11).

2. Transmission apparatus according to Claim 1, **characterized in that** a movable gear (31) which can be connected fixedly to the associated countershaft (15) so as to rotate with it via a second shifting element (K2), via which the second driving range can be produced in the switched-in operating state of the second shifting element (K2), meshes with a fixed gear (30) which is connected fixedly to the first sun gear (21) of the transmission device (9) so as to rotate with it, and a fixed gear (32) of the countershaft (15) is in operative connection with one of the gearwheels (33) of the countershaft (14) which is assigned to the first shifting element (K1).

3. Transmission apparatus according to either of Claims 1 and 2, **characterized in that** a movable gear (37) which can be connected fixedly to the associated countershaft (16) so as to rotate with it via the third shifting element (K3), via which the third driving range can be produced in the switched-in operating state of the third shifting element (K3), meshes with a further fixed gear (27; 42) of the shaft (28) which is assigned to the hydrostatic device (4), and a fixed gear (38) of the countershaft (16) is operatively connected to the transmission output shaft (18).

4. Transmission apparatus according to one of Claims 1 to 3, **characterized in that** a fixed gear (39) of a transmission input (7) can be connected to a hydraulic pump of a first work hydraulic system via a fixed gear (40) of a further countershaft (13) and can be connected to a hydraulic pump of a second work hydraulic system via a fixed gear (41) of an additional countershaft (12).

5. Transmission apparatus according to Claim 4, **characterized in that** the transmission input (7) can be brought into an operative connection with a planetary carrier (24) of the planetary gear mechanism (9) via driving direction shifting elements (KR, KV).

6. Transmission apparatus according to Claim 5, **characterized in that** the fixed gears (39, 40, 41) are arranged between the driving direction shifting elements (KR, KV) and the transmission input (7).

7. Transmission apparatus according to Claim 6, **characterized in that** the driving direction shifting elements (KR, KV) are arranged between the fixed gears (39, 40, 41) and the transmission input (7).

## Revendications

1. Dispositif de transmission (1) à dérivation de puissance, comprenant une première dérivation de puissance (3) et une deuxième dérivation de puissance (5), avec un dispositif de transmission (9) réalisé sous forme de transmission planétaire pour additionner les parties du couple appliqué pouvant être guidées par le biais des dérivations de puissance (3, 5), comprenant un dispositif hydrostatique (4) avec une première unité hydraulique (10) et une deuxième unité hydraulique (11), la première unité hydraulique (10) étant connectée à un deuxième arbre hydrostatique (29) et la deuxième unité hydraulique (11) étant connectée à un premier arbre hydrostatique (28), trois plages de conduite étant prévues à chaque fois pour la conduite en marche avant et la conduite en marche arrière, lesquelles peuvent être commutées à chaque fois par le biais d'au moins un élément de commutation devant être coupé (K1 à K3) et au moins un élément de commutation devant être enclenché (K1 à K3), chacun des éléments de commutation (K1 à K3) étant disposé sur un arbre intermédiaire séparé (14, 15, 16), la transmission planétaire présentant une première et une deuxième roue solaire (21, 22) qui sont en prise avec des doubles satellites communs (23), une couronne dentée (25) et un porte-satellites (24), la deuxième roue solaire (22) étant connectée au deuxième arbre hydrostatique (29) et la couronne dentée (25) étant connectée par le biais d'un pignon fixe (26) et d'un pignon fixe supplémentaire (27) au premier arbre hydrostatique (28), et la puissance des deux dérivations de puissance (3, 5) dans la première et la troisième plage de conduite étant additionnée par le biais du premier arbre hydrostatique (28) connecté à la deuxième unité hydraulique (11), **caractérisé en ce que** sur le premier arbre hydrostatique (28) sont disposés deux pignons fixes (27, 36), une moitié d'élément de commutation d'un premier élément de commutation (K1), par le biais duquel la première plage de conduite peut être réalisée, dans l'état de fonctionnement enclenché de l'élément de commutation (K1), étant en liaison fonctionnelle par le biais d'une roue dentée (33 ; 43) de l'arbre intermédiaire (14) avec l'arbre de sortie de transmission (8) et une moitié d'élément de commutation supplémentaire du premier élément de commutation (K1) étant en liaison fonctionnelle par le biais d'une roue dentée supplémentaire (35) de l'arbre intermédiaire (14) avec l'arbre (28) connecté au dispositif hydrostatique (4) et un support de disques intérieurs ou un support de disques extérieurs du premier élément de commutation (K1) étant connecté à l'arbre intermédiaire (14) et le support de disques extérieurs ou le support de disques intérieurs étant connecté à une roue dentée (35 ou 33) pouvant être accouplée par le biais du premier élément de commutation (K1) à l'arbre intermédiaire associé (14) et la roue dentée (33) pouvant être connectée de manière solidaire en rotation à l'arbre intermédiaire associé (14) par le biais du premier élément de commutation (K1) étant en liaison fonctionnelle avec l'arbre de sortie de transmission (8) et le pignon fixe (35) de l'arbre intermédiaire (14) s'engrenant avec un pignon fixe (36) de l'arbre (28) associé au dispositif hydrostatique (11).

2. Dispositif de transmission selon la revendication 1, **caractérisé en ce qu'**un pignon fou (31) pouvant être connecté de manière solidaire en rotation à l'arbre intermédiaire associé (15) par le biais d'un deuxième élément de commutation (K2) par le biais duquel la deuxième plage de conduite peut être réalisée dans l'état de fonctionnement enclenché du deuxième élément de commutation (K2), s'engrène avec un pignon fixe (30) connecté de manière solidaire en rotation à la première roue solaire (21) du dispositif de transmission (9) et un pignon fixe (32) de l'arbre intermédiaire (15) est en liaison fonctionnelle avec l'une des roues dentées (33) de l'arbre intermédiaire (14) associé au premier élément de commutation (K1).

3. Dispositif de transmission selon l'une quelconque des revendications 1 et 2, **caractérisé en ce qu'**un pignon fou (37) pouvant être connecté de manière solidaire en rotation à l'arbre intermédiaire associé (16) par le biais du troisième élément de commutation (K3) par le biais duquel la troisième plage de conduite peut être réalisée dans l'état de fonctionnement enclenché du troisième élément de commutation (K3) s'engrène avec un pignon fixe supplémentaire (27 ; 42) de l'arbre (28) associé au dispositif hydrostatique (4) et un pignon fixe (38) de l'arbre intermédiaire (16) est en liaison fonctionnelle avec l'arbre de sortie de transmission (18).

4. Dispositif de transmission selon l'une quelconque des revendications 1 à 3, **caractérisé en ce qu'**un pignon fixe (39) d'une entrée de transmission (7) peut être connecté par le biais d'un pignon fixe (40) d'un arbre intermédiaire supplémentaire (13) à une pompe hydraulique d'un premier système de travail hydraulique et par le biais d'un pignon fixe (41) d'un arbre intermédiaire supplémentaire (12) à une pompe hydraulique d'un deuxième système de travail hydraulique.

5. Dispositif de transmission selon la revendication 4, **caractérisé en ce que** l'entrée de transmission (7) peut être amenée en liaison fonctionnelle par le biais d'éléments de commutation dans la direction de conduite (KR, KV) avec un porte-satellites (24) de la transmission planétaire (9).

6. Dispositif de transmission selon la revendication 5, **caractérisé en ce que** les pignons fixes (39, 40, 41) sont disposés entre les éléments de commutation dans la direction de conduite (KR, KV) et l'entrée de transmission (7).

7. Dispositif de transmission selon la revendication 6, **caractérisé en ce que** les éléments de commutation dans la direction de conduite (KR, KV) sont disposés entre les pignons fixes (39, 40, 41) et l'entrée de transmission (7).
